# EUROPÄISCHE PATENTANMELDUNG

(11) **EP 1 527 916 A1**
(43) Veröffentlichungstag der Anmeldung: **04.05.2005**
(21) Anmeldenummer: 03292678.4
(22) Anmeldetag: 27.10.2003
(51) Int. Cl.: B60H 1/02, B60H 1/03

(54) **Heizvorrichtung eines Kraftfahrzeuges mit Zusatzheizung**

(71) Anmelder: Behr GmbH & Co. KG, 70469 Stuttgart (DE); Behr France S.A.R.L., 68250 Rouffach (FR)
(72) Erfinder: Burk, Roland, 70469 Stuttgart (DE); Otto, Jürgen, 75428 Illingen (DE); Traub, Matthias, 70825 Korntal-Münchingen (DE); Mougey, Mathieu, 68190 Ensisheim (FR)

(57) **Zusammenfassung**

Die Erfindung betrifft eine Heizvorrichtung eines eine Brennkraftmaschine (2) und einen Fahrzeuginnenraum aufweisenden Kraftfahrzeuges mit einem Kühlkreislauf (1) zur Kühlung der Brennkraftmaschine (2) und einem mindestens einen Heizkörper (7) aufweisenden Heizkreislauf (6) für die Beheizung des Fahrzeuginnenraumes sowie mit einer elektrischen Zusatzheizung, insbesondere einer PTC-Zusatzheizung (8).

Es wird vorgeschlagen, dass dem Kühl- und /oder Heizkreislauf (6) eine Wärmequelle als zweite Zusatzheizung (9) zuschaltbar ist.

## Beschreibung

Die Erfindung betrifft eine Heizvorrichtung eines eine Brennkraftmaschine und einen Fahrzeuginnenraum aufweisenden Kraftfahrzeuges nach dem Oberbegriff des Patentanspruches 1.

Kraftfahrzeuge mit verbrauchsoptimierten Motoren benötigen eine Zusatzheizung, um aufgrund der fehlenden Abwärme des Motors eine hinreichende Heizleistung für den Fahrzeuginnenraum bereit zu stellen. Derartige Zusatzheizungen gibt es in den verschiedensten Ausführungen. Durch die DE-A 44 33 814 und die EP-B 707 434 der Anmelderin oder die DE-A 198 11 629 wurden so genannte integrierte elektrische Zusatzheizungen bekannt, bei welchen elektrisch beheizbare Heizelemente, insbesondere PTC-Elemente in den Heizkörper einer Heizungsanlage integriert sind. Die elektrische Energie wird aus dem Bordnetz des Kraftfahrzeuges bezogen, und die Heizelemente geben ihre. Wärme direkt an die in den Fahrzeuginnenraum strömende Luft und/oder auch an das Kühlmittel, welches durch den Heizkörper strömt, ab. Durch die DE-A 199 11 547 der Anmelderin sowie die DE-A 199 57 452 wurde eine weitere Bauart für eine PTC-Zusatzheizung bekannt, nämlich ein so genanntes Heizregister mit PTC-Elementen, welches an einem Heizkörper einer Heizungsanlage als zusätzliches Teil befestigt wird.

Diese elektrischen Zusatzheizungen wirken primär auf die Luft und entfalten daher ihre Heizwirkung relativ schnell. Andererseits belasten sie das Bordnetz und sind daher in der Leistung beschränkt. Darüber hinaus sinkt ihre Leistung bei steigenden Kühlmitteltemperaturen.

Durch die DE-A 199 62 863 der Anmelderin sowie die DE-C 32 25 373 wurden so genannte Abgas-Zusatzheizungen bekannt, wobei ein Abgaswärmeübertrager primärseitig vom Abgas der Brennkraftmaschine und sekundärseitig vom Kühlmittel des Heizkreislaufes beaufschlagt wird. Die Motorabwärme im Abgas wird somit auf das Kühlmittel übertragen und zum Heizköper der Heizungsanlage transportiert, um dort die Luft für den Fahrzeuginnenraum zu erwärmen. Die.Abgasheizung ist daher träger als die elektrische Zusatzheizung und weist beim Kaltstart eine geringe Heizleistung auf, die jedoch mit zunehmender Fahrdauer des Kraftfahrzeuges ansteigt.

Durch die DE-A 38 32 966, die DE-A 44 20 841 sowie durch die US-A 4,993,377 wurden so genannte Visko-Heizungen bekannt, welche mechanische Energie der Brennkraftmaschine durch Flüssigkeitsreibung in Wärme umwandeln und diese Wärme über einen Kühlmantel an das Kühlmittel des Kühlkreislaufes der Brennkraftmaschine bzw. des Heizkreislaufes abgeben. Die Visko-Heizung kann bedarfsweise, z. B. beim Kaltstart über eine Kupplung zugeschaltet werden und erzeugt dann sofort Wärme, die über das Kühlmittel dem Heizkörper der Heizungsanlage zugeführt wird. Somit ist auch diese Visko-Heizung, da sie indirekt über das Kühlmittel wirkt, relativ träge und weist vor allem im Leerlauf eine geringe Zuheizleistung auf. Vorteile ergeben sich für die Visko-Heizung bei einem hohen Anteil von Überlandfahrten, also bei höherer Motordrehzahl über längere Zeit.

Durch die DE-A 44 35 693 wurde eine weitere Bauart einer Zusatzheizung bekannt, nämlich eine Brennstoffheizung, bei welcher die Wärme durch Verbrennung von Kraftstoff gewonnen wird. Hierzu ist ein Brenngas/Kühlmittel-Wärmeübertrager erforderlich, welcher die Verbrennungswärme auf das Kühlmittel überträgt. Auch diese Zusatzheizung arbeitet wegen der indirekten Wärmeübertragung über das Kühlmittel an die dem Fahrzeuginnenraum zugeführte Luft relativ träge. Andererseits ist sie motorunabhängig, jedoch mit einem relativ großen apparativen Aufwand (Brenner und spezieller Wärmeübertrager) verbunden.

Keine der vorgenannten Zusatzheizungen kann daher das Anforderungsprofil in vollem Umfang abdecken, zumal die zukünftige Motorenentwicklung weiter in Richtung verbrauchsarme Motoren, d. h., mit hohem Wirkungsgrad und wenig Abwärme geht.

Es ist daher Aufgabe der vorliegenden Erfindung, eine Heizvorrichtung der eingangs genannten Art dahingehend zu verbessern, dass sie über einen weiten Betriebsbereich des Kraftfahrzeuges eine hinreichende Heizleistung zur Verfügung stellt.

Diese Aufgabe wird durch die Merkmale des Patentanspruches 1 gelöst. Erfindungsgemäß ist eine zweite Zusatzheizung vorgesehen, welche mit der ersten Zusatzheizung, d. h. der elektrischen bzw. PTC-Heizung kombiniert wird. Die zweite Zusatzheizung bezieht ihre Energie aus einer Wärmequelle, die nicht aus dem elektrischen Bordnetz gespeist wird. Insofern wird das Bordnetz nicht weiter belastest. Darüber hinaus ergibt sich durch diese Kombination von zwei unterschiedlichen Zusatzheizungen der Vorteil, dass ein größerer Betriebsbereich des Kraftfahrzeuges abgedeckt wird und Mängel einer, z. B. der elektrischen Zusatzheizung durch Vorteile der anderen nicht elektrischen Zusatzheizung ausgeglichen werden.

Nach einer vorteilhaften Ausgestaltung der Erfindung ist die zweite Zusatzheizung als Abgasheizung ausgebildet, bei welcher die Abwärme der Abgase mittels eines Abgaswärmeübertragers auf das Kühlmittel des Heizkreislaufes übertragen wird. Diese Kombination hat u. a. den Vorteil, dass die Heizung relativ schnell "anspringt", weil die PTC-Heizung die Luft sehr schnell erwärmt. Nach dieser "Anlaufphase" kommt die Abgasheizung verstärkt zur Wirkung. Die PTC-Heizung kann dann abgeschaltet bzw. zurückgenommen werden.

Nach einer weiteren vorteilhaften Ausgestaltung der Erfindung ist für die zweite Zusatzheizung eine so genannte Visko-Heizung vorgesehen, d. h. eine vom Motor - gegebenenfalls über eine Kupplung zuschaltbare - angetriebene Flüssigkeitsreibungskupplung, welche die von ihr durch Flüssigkeitsreibung erzeugte Wärme über einen Kühlmantel an das Kühlmittel des Heizkreislaufes abgibt. Damit gelangt die Reibungswärme in den Heizkörper, der die Luft erwärmt. Die Viskoheizung ist also im Heizkreislauf stromaufwärts vom Heizkörper angeordnet, d.h. im Heizkörpervorlauf. Durch diese Kombination wird der Vorteil erreicht, dass ebenfalls der Betriebsbereich der Zusatzheizung erweitert wird, da sich beide Zuheiztypen ergänzen. Die PTC-Heizung bringt eine schnelle Aufheizung beim Kaltstart, die Visko-Heizung eine verbesserte Heizleistung bei Überlandfahrten.

In weiterer vorteilhafter Ausgestaltung der Erfindung ist als zweite Zusatzheizung eine Brennstoffheizung vorgesehen, die motorunabhängig arbeitet, da sie die Wärmeenergie aus der Verbrennung von Kraftstoff bezieht. Die Verbrennungsgase geben ihre Wärme über einen Wärmeübertrager an das Kühlmittel ab, welches den Heizkörper und damit die Luft erwärmt. Die Brennstoffheizung ist als Zusatzheizung - nach einer Anlaufphase, die wiederum durch die PTC-Heizung überbrückt wird - sehr wirksam und in ihrer Leistung regelbar.

Zusammenfassend ergeben sich für die vorgenannten Kombinationen von zwei Zusatzheizungen eine erhöhte Sicherheit (Redundanz), eine verbesserte Aufheizung und ein erhöhter Komfort in den verschiedensten Fahrzuständen.

Ausführungsbeispiele der Erfindung sind in der Zeichnung dargestellt und werden im Folgenden näher beschrieben. Es zeigen
- Fig. 1: eine Kombination von PTC- und Abgasheizung und
- Fig. 2: eine Kombination von PTC- und Visko-Heizung.

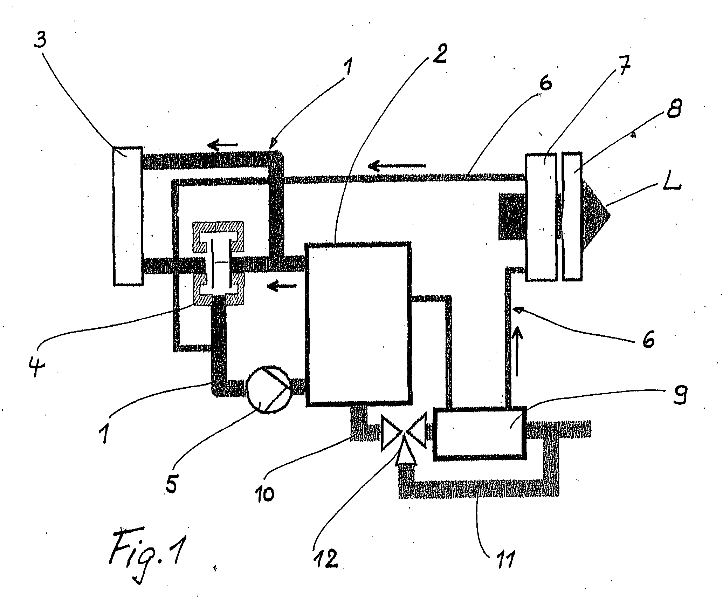

Fig. 1 zeigt einen Kühlkreislauf 1 für eine Brennkraftmaschine bzw. einen Verbrennungsmotor 2 eines nicht dargestellten Kraftfahrzeuges. Im Kühlkreislauf 1 sind ein Kühlmittelkühler 3, ein Thermostat 4 und eine Kühlmittelpumpe 5 angeordnet. An den Kühlkreislauf 1 ist ein Heizkreislauf 6 angeschlossen, in welchem ein Heizkörper 7 und eine PTC-Zusatzheizung 8 sowie ein Abgaswärmeübertrager 9 angeordnet sind. Der Heizkörper 7 und die PTC-Zusatzheizung 8 werden von Luft, dargestellt durch einen Pfeil L, durchströmt, welche einem nicht dargestellten Fahrzeuginnenraum des Kraftfahrzeuges zugeleitet wird. Der Abgaswärmeübertager 9 ist an eine vom Motor 2 ausgehende Abgasleitung 10 angeschlossen und wird primärseitig von Abgas durchströmt. Der Abgaswärmeübertrager 9 kann mittels einer Bypassleitung 11, welche über ein Abgasventil 12 zu- oder abschaltbar ist, umgangen werden.

Die Funktion der beiden Zusatzheizungen ist folgende: Der Fahrzeuginnenraum wird durch den Luftstrom L, welcher den Heizkörper 7 und die PTC-Zusatzheizung 8 passiert, erwärmt. Die PTC-Zusatzheizung 8 ist bei Bedarf, z. B. bei einem Kaltstart des Motors 2 zuschaltbar und erwärmt dann direkt den Luftstrom L, was zu einer relativ schnellen Aufheizung führt. Der Abgaswärmeübertrager 9 bzw. die Abgasheizung wird über das Abgasventil 12 zugeschaltet, indem der Bypass 11 gesperrt wird und das Abgas den Abgaswärmeübertrager 9 durchströmt. Das dadurch erwärmte Kühlmittel gelangt dann über den Heizkreislauf 6 direkt zum Heizkörper 7, der damit relativ früh erwärmtes Kühlmittel erhält. Damit wird die Heizleistung des Heizkörpers 7 verstärkt. Beide Zusatzheizungen, d. h. sowohl die PTC-Heizung 8 als auch die Abgasheizung 9 können zusammen oder getrennt abgeschaltet werden, der Abgaswärmeübertrager 9 durch Umleitung der Abgase über den Bypass 11.

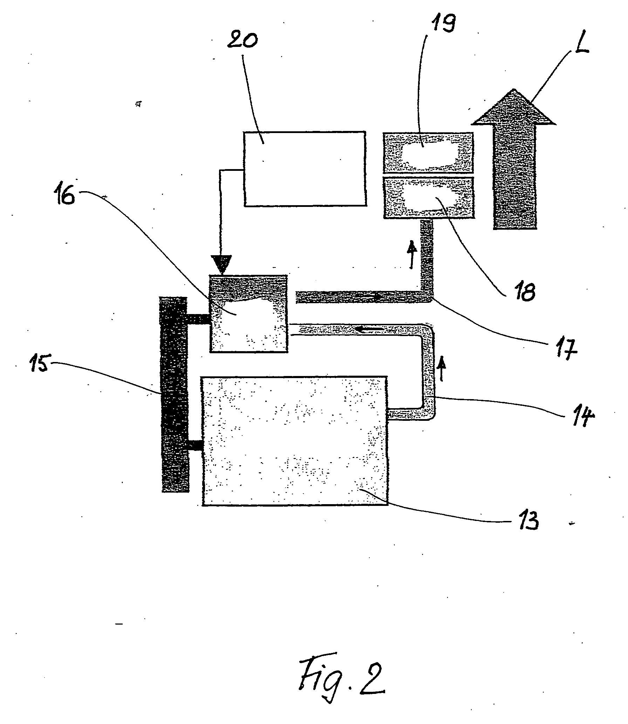

Fig. 2 zeigt ein weiteres Ausführungsbeispiel der Erfindung, und zwar eine Kombination einer PTC- und einer Visko-Zusatzheizung. Ein Verbrennungsmotor 13 weist einen Kühlkreislauf 14 (vereinfacht dargestellt) und einen Kühlmittelkühler 15 auf. In den Motorrücklauf bzw. den Kühlervorlauf des Kühlkreislaufes 14 ist eine Visko-Heizung 16 geschaltet, welche über eine Kühlmittelleitung 17 eines nicht vollständig dargestellten Heizkreislaufes mit einem Heizkörper 18 verbunden ist. Der Heizkörper 18 und eine PTC-Zusatzheizung 19 werden von einem Luftstrom, dargestellt durch einen Pfeil L, durchströmt, welcher in einen nicht dargestellten Fahrzeuginnenraum des Kraftfahrzeuges geleitet wird. Die so genannte Visko-Heizung 16 ist aus dem eingangs genannten Stand der Technik bekannt; sie kann entweder über eine Kupplung mit dem Motor verbunden und somit zugeschaltet werden, oder sie wird bei einer dauerhaften Verbindung mit dem Motor 16 in ihrer Heizleistung geregelt, beispielsweise durch Veränderung des Flüssigkeitsreibungsspaltes. Diese Steuerung der Visko-Heizung 16 ist durch ein Steuergerät 20 angedeutet.

Die Funktion dieser beiden Zusatzheizungen ist ähnlich wie beim vorherigen Ausführungsbeispiel. Für eine schnelle Aufheizung des Fahrzeuginnenraums, z. B. bei einem Kaltstart wird zunächst die PTC-Heizung 19 eingeschaltet. Etwas zeitlich versetzt wird dann die Visko-Heizung 16 durch Förderung von warmem Kühlmittel in den Heizkörper 18 wirksam. Beide Zusatzheizungen können unabhängig voneinander betrieben werden.

## Patentansprüche

1. Heizvorrichtung eines eine Brennkraftmaschine und einen Fahrzeuginnenraum aufweisenden Kraftfahrzeuges mit einem Kühlkreislauf (2, 14) zur Kühlung der Brennkraftmaschine (2, 13) und einem mindestens einen Heizkörper (7, 18) aufweisenden Heizkreislauf (6, 17) für die Beheizung des Fahrzeuginnenraumes sowie mit einer elektrischen Zusatzheizung, insbesondere einer PTC-Zusatzheizung (8, 19), **dadurch gekennzeichnet, dass** dem Kühl- und /oder Heizkreislauf (6; 14, 17) eine Wärmequelle als zweite Zusatzheizung (9, 16) zuschaltbar ist.

2. Heizvorrichtung nach Anspruch 1, **dadurch gekennzeichnet, dass** die Wärmequelle als Abgaswärmeübertrager (9) ausgebildet ist.

3. Heizvorrichtung nach Anspruch 2, **dadurch gekennzeichnet, dass** der Abgaswärmeübertrager (9) im Heizkreislauf (6) zwischen Brennkraftmaschine (2) und Heizkörper (7) angeordnet ist.

4. Heizvorrichtung nach Anspruch 1, **dadurch gekennzeichnet, dass** die Wärmequelle als Visko-Heizung (16) ausgebildet ist.

5. Heizvorrichtung nach Anspruch 4, **dadurch gekennzeichnet, dass** die Visko-Heizung (16) im Heizkreislauf (17) stromaufwärts vom Heizkörper (18) angeordnet ist.

6. Heizvorrichtung nach Anspruch 1, **dadurch gekennzeichnet, dass** die Wärmequelle als Brennstoffheizung ausgebildet ist.
